# EUROPÄISCHE PATENTSCHRIFT

(11) **EP 2 452 094 B1**
(45) Veröffentlichungstag und Bekanntmachung des Hinweises auf die Patenterteilung: **27.03.2013**
(21) Anmeldenummer: 10732905.4
(22) Anmeldetag: 05.07.2010
(51) Int. Cl.: F16D 65/10

(54) **ALS GUSSTEIL AUSGEBILDETE BREMSTROMMEL**
BRAKE DRUM IMPLEMENTED AS A CASTING
TAMBOUR DE FREIN SE PRÉSENTANT SOUS LA FORME D'UNE PIÈCE MOULÉE

(30) Priorität: 06.07.2009 DE 102009032008
(43) Veröffentlichungstag der Anmeldung: 16.05.2012
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2010/059559
(87) Internationale Veröffentlichungsnummer: WO 2011/003863

(56) Entgegenhaltungen:
- CH-A- 369 669
- DE-A1- 19 723 578
- US-A- 1 975 968
- US-A- 2 026 263
- US-A- 2 588 665

## Beschreibung

Die Erfindung betrifft eine als Gussteil ausgebildete Bremstrommel nach dem Oberbegriff des Anspruchs 1, wie z.B. aus US-A-1975 968 bekannt.

Derartige Bremstrommeln sind üblicherweise aus Grauguss einstückig ausgebildet, d.h., der zylindrische Trommelmantel sowie der an einem Ende angeschlossene, sich radial nach innen erstreckende Flansch sind starr miteinander verbunden.

Bei einer Bremsung dehnt sich der Trommelmantel aufgrund einer Erwärmung durch an der Innenwand reibend anliegender Bremsbacken radial aus. Im Bereich der starren Anbindung zum Flansch wird diese Ausdehnung jedoch durch den Flansch verhindert, so dass sich der Trommelmantel zum offenen Ende hin konisch aufdehnt. Dabei verliert die Innenwandung des Trommelmantels, also die Reibfläche, ihre zylindrische Ausrichtung, wodurch die Bremswirkung in einem nicht akzeptablen Maße reduziert wird.

Darüber hinaus führt die durch den Flansch verhinderte Dehnung im Anbindungsbereich zu Spannungen in der Reibfläche des Trommelmantels, mit der Folge von Hitzerissen, die sogar zu einem Bersten des Trommelmantels führen können.

Die Verformung des Trommelmantels, die auch als Schirmen bezeichnet wird, ergibt weiterhin ein ungleichmäßiges Tragbild und ungleichmäßigen Verschleiß der angreifenden Bremsbacken sowie des Trommelmantels selbst.

Bei einem Wechsel der Bremsbacken ist deshalb eine Bearbeitung des Trommelmantels erforderlich, bei der durch Ausdrehen wieder eine zylindrische Reibfläche geschaffen wird.

Um diese doch sehr gravierenden Nachteile zu beseitigen, ist beispielsweise in der EP 0 490 021 B1 vorgeschlagen, den Trommelmantel zu versteifen, indem umlaufende Stahlringe mit eingegossen werden, wobei diese Stahlringe in Form eines Käfigs vorgefertigt sind. Allerdings hat sich diese im Sinne eines Korsetts wirkende Konzeption nicht in dem gewünschten Umfang bewährt.

Andere konstruktive Lösungen zur Stabilisierung des Trommelmantels, d.h. zur Vermeidung des genannten Schirmens, sehen eine Versteifung des Trommelmantels vor, wozu auf dessen Außenseite zumindest im freien Endbereich eine umlaufende Rippe angeformt ist.

Diese Maßnahme führt jedoch zum einen zu einer Erhöhung der Masse der Bremstrommel insgesamt und andererseits durch Unterdrückung der Wännedehnung zu zusätzlichen Wärmespannungen im Trommelmantel, was im Übrigen gleichermaßen für die erwähnte Einbettung von Stahlringen gilt.

Eine gattungsfremde Bremstrommel ist aus der DE 29 27 148 A1 bekannt, die nicht als Gussteil ausgebildet ist, sondern aus Stahl besteht. Dort wird eine im Wesentlichen behinderungsfreie radiale Ausdehnung des Trommelmantels dadurch erreicht, dass er in radialer Richtung frei bewegbar mit dem Flansch verbunden ist.

Die Befestigung des Flansches mit dem Trommelmantel ist jedoch sehr aufwendig und steht hinsichtlich der Fertigungskosten einer optimierten Herstellung entgegen.

Unabhängig davon weist eine solche Stahl-Bremstrommel betriebliche und funktionale Nachteile gegenüber einer Guss-Bremstrommel auf, so dass diese Bremstrommel keine empfehlenswerte Alternative darstellt.

Der Erfindung liegt die Aufgabe zugrunde, eine Bremstrommel der gattungsgemäßen Art so weiterzuentwickeln, dass mit geringem konstruktiven und fertigungstechnischen Aufwand ihre Standzeit erhöht und ihre Betriebssicherheit verbessert wird.

Diese Aufgabe wird durch eine Bremstrommel mit den Merkmalen des Anspruchs 1 gelöst.

Durch die stoffliche Trennung des Flansches und des Trommelmantels mittels der Gleitelemente wird nun erreicht, dass auch bei einer Bremstrommel aus Guss eine ungehinderte wärmebedingte radiale Ausdehnung des Trommelmantels möglich ist.

Besonders hervorzuheben ist dabei, dass die Herstellung dieser Bremstrommel außerordentlich einfach ist.

Die Gleitelemente, die aus einem Material mit einem höheren Schmelzpunkt als der des Gussmaterials des Trommelmantels und des Flansches und aus metallischem Werkstoff, vorzugsweise aus rostfreiem Stahl, oder nichtmetallischem Werkstoff, beispielsweise aus Keramik bestehen, werden in die Gießform eingelegt und die Bremstrommel anschließend als einteiliges Bauteil gegossen.

Nach einer bevorzugten Ausbildung der Erfindung weisen der Trommelmantel und der Flansch jeweils einen Zahnkranz auf, deren Zähne ineinander greifen. Die Gleitelemente sind dabei zwischen den einander zugewandten radialen Seitenflächen sowie den Auflageflächen der Zähne angeordnet.

Der gegossene Rohling schließt die Gleitelemente zunächst vollständig ein.

In einer folgenden Bearbeitung wird ein über den Trommelmantel nach außen überstehender Rand des Flansches abgedreht, bis die Gleitelemente frei liegen und die Zähne der beiden Zahnkränze in einer Umfangsebene liegen. Dadurch entstehen zwei getrennte, radial zueinander bewegbare Bauteile.

Durch entsprechende Formgebung der Gleitelemente wird ein in axialer Richtung wirkender Formschluss des Flansches und des Trommelmantels erreicht, wozu beispielsweise in den Gleitelementen sich radial erstreckende Sicken vorgesehen sind, die die radiale Bewegung des Trommelmantels zum Flansch zulassen, jedoch eine axiale Bewegung ausschließen.

Ein weiterer Gedanke der Erfindung sieht vor, dass jedes Gleitelement zweilagig ausgebildet ist, wobei eine der beiden aneinander liegenden Lagen formschlüssig am Trommelmantel und die andere Lage formschlüssig am Flansch gehalten ist. Auch hierbei ist die Konfiguration so gewählt, dass eine behinderungsfreie radiale Bewegbarkeit des Trommelmantels möglich ist, bei der dann die aneinander liegenden Flächen der beiden Lagen sich gegeneinander verschieben.

Bei einer einlagigen Ausbildung der Gleitelemente ist eine einseitige Beschichtung sinnvoll, mit der eine Verbindung des Gleitelementes mit dem zugeordneten Gussteil verhindert wird.

Jedes Gleitelement kann im Grundriss U-förmig ausgebildet sein und einen Zahn des Zahnkranzes des Trommelmantels dreiseitig umschließen, wobei der die insoweit parallelen Schenkel verbindende Steg am Grund einer gebildeten Zahnlücke des Zahnkranzes des Flansches anliegt.

Um den Trommelmantel in jedem Fall, also auch bei einem möglichen Verzug der Gleitelemente beim Gießen die Möglichkeit einer radialen Ausdehnung zu geben, sind die Schenkel des U-förmigen Gleitelementes in radialer Richtung unter einem Winkel zueinander angeordnet, so dass sich in Richtung der Rotationsachse der Bremstrommel eine Verjüngung bzw. entgegengesetzt eine Erweiterung ergibt.

Durch die Anordnung der Gleitelemente zwischen den Zähnen der Zahnkränze ist eine hohe Belastbarkeit möglich, da lediglich drehmomentenabhängige Druckkräfte aufgenommen werden müssen, was naturgemäß eine geringe Dimensionierung, insbesondere hinsichtlich der Materialstärke, erlaubt.

Prinzipiell sind die zum Stand der Technik beschriebenen, aus der thermischen Belastung sich ergebenden Probleme gelöst, wozu insbesondere die deutliche Senkung einer Rissanfälligkeit, die Verhinderung eines tangentialen Schrägverschleißes der Bremsklötze sowie des Trommelmantels zählen.

Die Verwendung von nichtrostendem Stahl als Gleitelemente verhindert eine Korrosion im Trennbereich des Trommelmantels und des Flansches, wodurch sich eine sehr hohe Standzeit der Bremstrommel ergibt.

Ein positiver Einfluss auf das Betriebsverhalten der Bremstrommel stellt sich aus einem weiteren Gedanken der Erfindung ein, nach dem durch die Bildung der Zähne des Trommelmantels im Projektionsbereich mit den Zähnen des Flansches Kühlöffnungen geschaffen sind, durch die eine sehr gute Wärmeabfuhr im Verbindungsbereich Trommelmantel/Flansch gewährleistet ist.

Weitere vorteilhaft Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figuren 1 - 3: jeweils eine als Gussteil ausgebildete Bremstrommel als Rohteil vor einer Endbearbeitung, in unterschiedlichen Ansichten
- Figuren 4 und 5: die fertig bearbeitete Bremstrommel in jeweils einer perspektivischen Ansicht
- Figur 6: einen Teilausschnitt der Bremstrommel, ebenfalls schaubildlich dargestellt
- Figur 7: eine Einzelheit der Bremstrommel in zwei verschiedenen Ansichten.

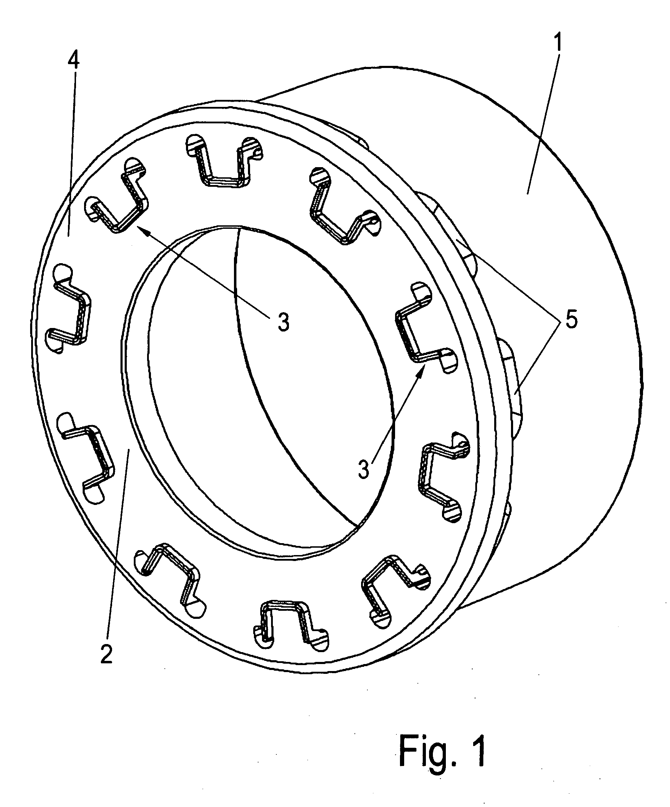

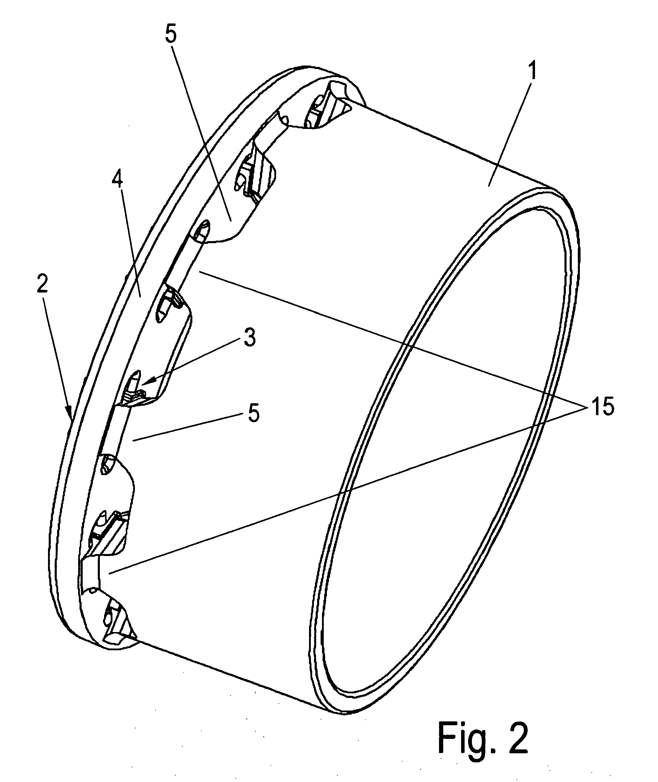

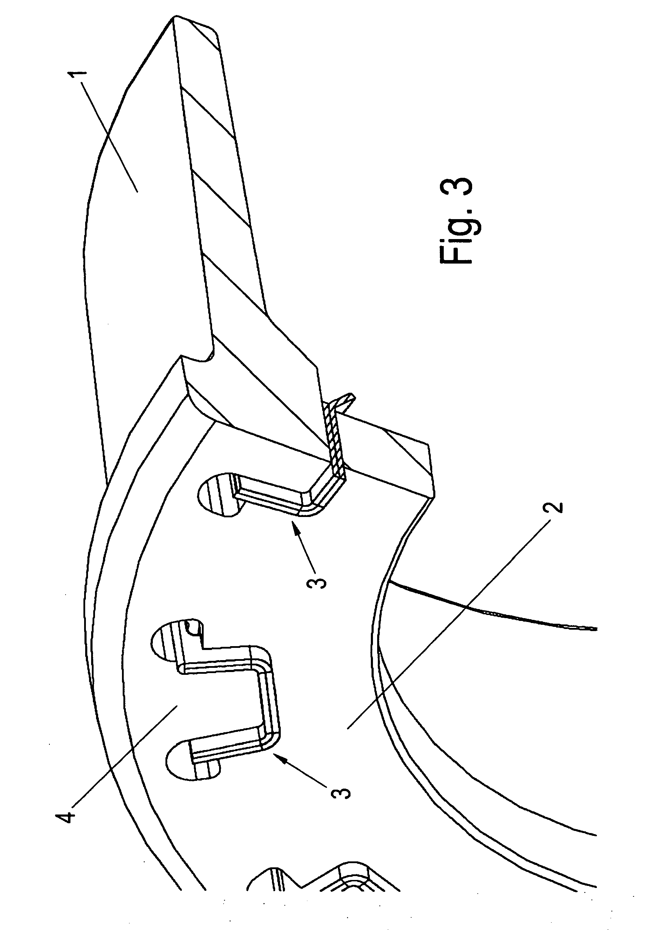

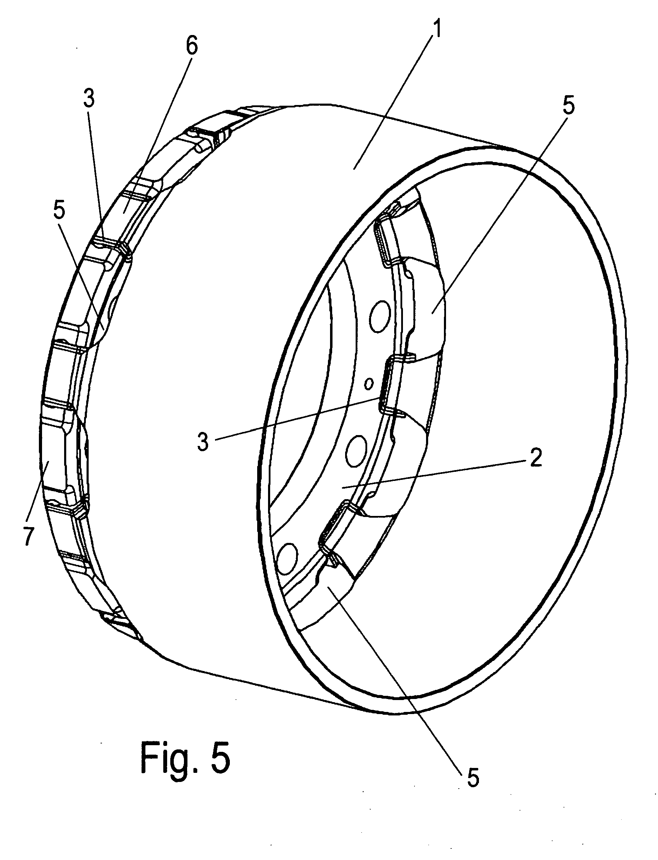

In den Figuren 1 bis 6 ist eine als Gussteil ausgebildete Bremstrommel dargestellt, die einen Trommelmantel 1 und einen stofflich davon getrennten Flansch 2 aufweist, durch den die Bremstrommel an einer nicht gezeigten Radnabe eines Fahrzeuges befestigbar ist.

Die stoffliche Trennung des Trommelmantels 1 und des Flansches 2 ermöglicht in radialer Richtung eine Relativbewegung zueinander, wozu eingegossene Gleitelemente 3 vorgesehen sind, die aus einem Material mit einem höheren Schmelzpunkt bestehen als der Trommelmantel 1 und der Flansch 2.

In den Figuren 1 bis 3 ist die bereits gegossene, jedoch noch nicht endbearbeitete Bremstrommel dargestellt, bei der der Flansch 2 einen konzentrischen, radial nach außen ausgerichteten angegossenen Rand 4 aufweist, der über Verbindungsstege 15 mit dem rotationssymmetrischen Trommelmantel 1 verbunden ist.

Zur Herstellung der Bremstrommel werden die in gleichem Winkelabstand angeordneten Gleitelemente 3, im Beispiel als zweilagige Blechformteile ausgebildet, jeweils in einen zusätzlichen Kern teilweise eingebunden und der Trommelmantel 1 und der Flansch 2 als einstückiges Bauteil gegossen.

Üblicherweise wird die Bremstrommel stehend, d.h. mit dem Flansch 2 nach unten gegossen, wobei das flüssige Eisen zunächst den Flanschbereich ausfüllt und dann gleichmäßig in den zylindrischen Bereich nach oben steigt.

Durch einen den Rand 4 bildenden Überströmbereich im Außenbereich des Flansches 2 füllt sich der Bereich des Trommelmantels 1.

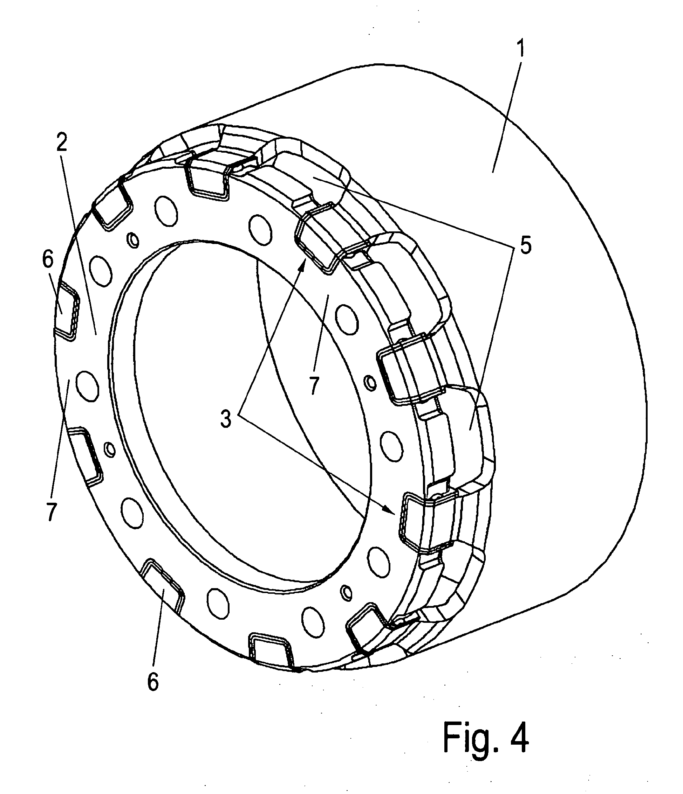

In den Figuren 4 bis 6 ist die fertig bearbeitete Bremstrommel gezeigt, bei der der Rand 4 vollständig spanend entfernt ist, so dass die in diesen Figuren gezeigte Ausbildung entsteht.

Durch die eingebetteten Gleitelemente 3 sind an den Trommelmantel 1 angeformte Zähne 6 entstanden, die einen Zahnkranz bilden, der in einen Zahnkranz des Flansches 2 eingreift, der Zähne 7 aufweist.

Zwischen den einander zugewandten radialen Seitenflächen der Zähne 6, 7 sind die Gleitelemente 3 angeordnet, ebenso wie im Grund einer jeweiligen Zahnlücke zwischen den Zähnen 7 des Flansches 2.

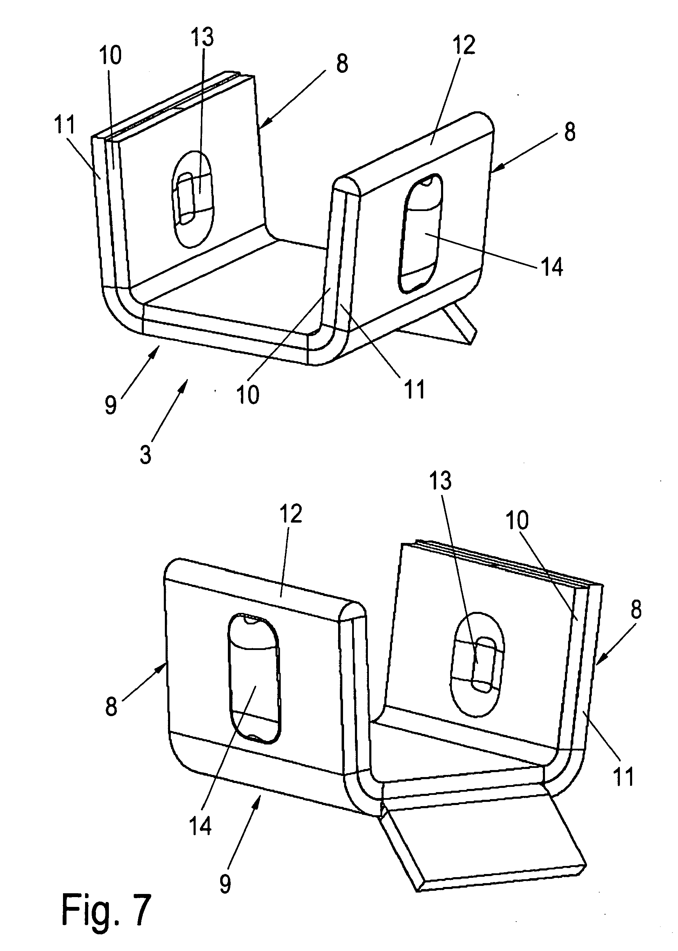

Ein solches Gleitelement 3 ist als Einzelheit in der Figur 7 gezeigt.

Darin ist erkennbar, dass das Gleitelement 3, wie erwähnt, als zweilagiges, U-förmiges Blechformteil ausgebildet ist, mit einer Innenlage 10 und einer Außenlage 11, die weitgehend flächig aneinander liegen und jeweils im Wesentlichen parallel ausgerichtete Schenkel 8 bilden, die durch einen gleichfalls zweilagigen Steg 9 miteinander verbunden sind, der am Grund der genannten Zahnlücke anliegt.

In der Figur 7 ist das Gleitelement 3 als Rohling gezeigt, wie es in die Gießform eingelegt wird. Es ist zu erkennen, dass hierbei eine Biegekante 12, die Innen- und Außenlagen 10, 11 des einen Schenkels 8 miteinander verbindet, die bei der nach dem Gießen erfolgenden Bearbeitung, ebenso wie der Rand 4 gleichfalls spanend entfernt wird, so dass in Funktion die Innen- und Außenlage 10, 11 radial gegeneinander verschiebbar sind.

Zur axialen Sicherung des Trommelmantels 1 gegenüber dem Flansch 2 weisen die beiden Innenlagen 10 jeweils nach außen gestülpte Vorsprünge 13 auf, die in radial ausgerichtete Sicken 14 der Außenlagen 11 eingreifen und so eine radiale Führung bilden, wobei die durch die Sicken 14 entstandene Ausprägung in Richtung des Zahnes 7 einen Formschluss mit dem Flansch 2 bildet, während die Einprägung des Vorsprungs 13 einen solchen Formschluss mit dem Zahn 6 des Trommelmantels 1 ergibt.

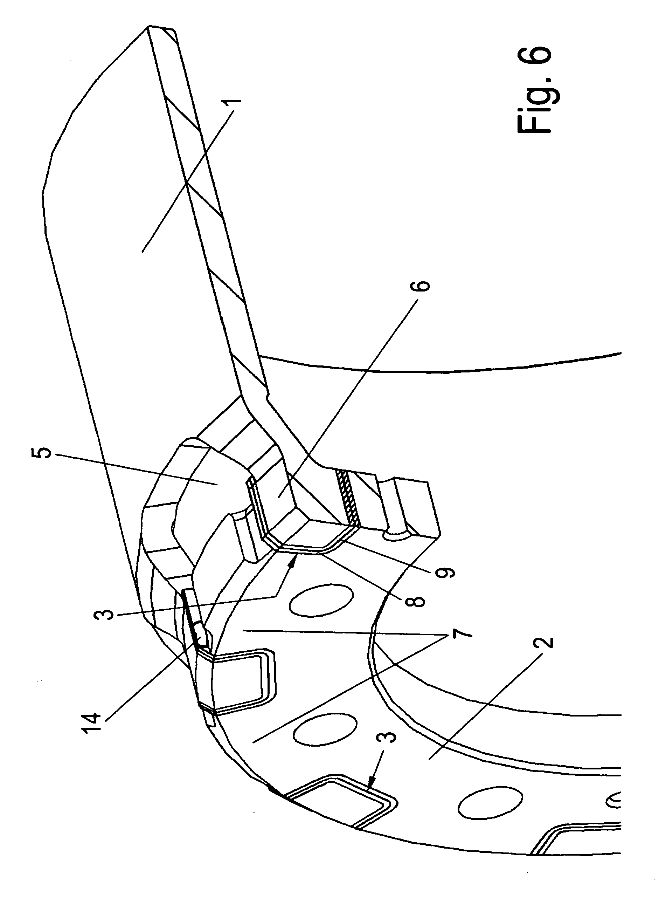

Insbesondere in der Figur 6 ist deutlich erkennbar, dass der Steg 9 ebenso wie die Schenkel 8 den Zahn 6 des Trommelmantels 1 von den benachbarten Zähnen 7 des Flansches 2 trennen, so dass keine stoffliche Verbindung zwischen dem Flansch 2 und dem Trommelmantel 1 gegeben ist.

Zur Optimierung der Abfuhr von Reibungswärme beim Bremsen sind die Zähne 6, die im Übrigen stirnseitig mit den Zähnen 7 und den Gleitelementen 3 bündig verlaufen, in axialer Richtung über die Dicke der Zähne 7 des Flansches 2 hinaus ausgebildet, so dass sich im Überdeckungsbereich mit dem jeweiligen Zahn 7 eine Kühlöffnung 5 ergibt.

### Bezugszeichenliste

- 1: Trommelmantel
- 2: Flansch
- 3: Gleitelement
- 4: Rand
- 5: Kühlöffnung
- 6: Zahn
- 7: Zahn
- 8: Schenkel
- 9: Steg
- 10: Innenlage
- 11: Außenlage
- 12: Biegekante
- 13: Vorsprung
- 14: Sicke
- 15: Verbindungssteg

## Patentansprüche

1. Als Gussteil ausgebildete Bremstrommel, mit einem zylindrischen Trommelmantel (1) und einem angeschlossenen Flansch (2) welche stofflich voneinander getrennt sind, zur Befestigung an einer Radnabe, **dadurch gekennzeichnet, dass** der Trommelmantel (1) und der Flansch (2) durch eingegossene Gleitelemente (3) relativ zueinander radial bewegbar miteinander verbunden sind.

2. Bremstrommel nach Anspruch 1, **dadurch gekennzeichnet, dass** die Gleitelemente (3) aus einem Material bestehen, dessen Schmelzpunkt höher ist als das Material des Trommelmantels (1) und des Flansches (2).

3. Bremstrommel nach Anspruch 1 oder 2, **dadurch gekennzeichnet, dass** der **Trommelmantel** (1) und der Flansch (2) jeweils einen Zahnkranz bildende, ineinander greifende Zähne (6, 7) aufweisen, wobei zwischen den einander zugewandten radialen Seitenflächen der Zähne (6, 7) die Gleitelemente (3) angeordnet sind.

4. Bremstrommel nach einem der vorhergehenden Ansprüche, **dadurch gekennzeichnet, dass** das Gleitelement (3) als Blechformteil ausgebildet ist.

5. Bremstrommel nach einem der vorhergehenden Ansprüche, **dadurch gekennzeichnet, dass** das Gleitelement (3) U-förmig gestaltet ist.

6. Bremstrommel nach einem der vorhergehenden Ansprüche, **dadurch gekennzeichnet, dass** das Gleitelement (3) zweilagig, unter Bildung einer Innenlage (10) und einer Außenlage (11) ausgebildet ist.

7. Bremstrommel nach einem der vorhergehenden Ansprüche, **dadurch gekennzeichnet, dass** die Innenlage (10) und die Außenlage (11) der jeweils sich gegenüberliegenden Schenkel (8) zur axialen Verschiebesicherung miteinander korrespondierende Formschlussmittel aufweisen, wobei die Innenlagen (10) und die Außenlagen (11) radial zueinander bewegbar sind.

8. Bremstrommel nach einen der Ansprüche 3 bis 8, **dadurch gekennzeichnet, dass** das Gleitelement (3) bei einlagiger Ausführung einseitig formschlüssig an einem der Zähne (6, 7) gehalten ist.

9. Bremstrommel nach einem der vorhergehenden Ansprüche, **dadurch gekennzeichnet, dass** das Gleitelement (3) bei einlagiger Ausbildung auf der dem Formschluss gegenüberliegenden Anlagefläche mit einer Trennbeschichtung versehen ist.

10. Bremstrommel nach einem der vorhergehenden Ansprüche, **dadurch gekennzeichnet, dass** das Gleitelement (3) bei zweilagiger Ausbildung mit der Innenlage (10) und der Außenlage (11) formschlüssig mit dem jeweils anliegenden Zahn (6, 7) verbunden ist.

11. Bremstrommel nach einem der Ansprüche 3 bis 10, **dadurch gekennzeichnet, dass** das jeweilige Gleitelement (3) einen zugeordneten Zahn (6) des Trommelmantels (1) umgreift.

12. Bremstrommel nach einem der Ansprüche 7 bis 11, **dadurch gekennzeichnet, dass** ein die Schenkel (8) des U-förmigen Gleitelementes (3) verbindender Steg (9) am Grund einer zwischen zwei Zähnen (7) des Flansches (2) gebildeten Zahnlücke anliegt.

13. Bremstrommel nach einem der vorhergehenden Ansprüche, **dadurch gekennzeichnet, dass** das Gleitelement (3) aus einem metallischen oder nichtmetallischen Material besteht.

14. Bremstrommel nach einem der vorhergehenden Ansprüche, **dadurch gekennzeichnet, dass** das Gleitelement (3) aus rostfreiem Stahl besteht.

15. Bremstrommel nach einem der Ansprüche 3 bis 14, **dadurch gekennzeichnet, dass** die Gleitelemente (3), die Zähne (6) und die Zähne (7) stirnseitig der Bremstrommel bündig verlaufen.

16. Bremstrommel nach einem der Ansprüche 3 bis 16, **dadurch gekennzeichnet, dass** der Trommelmantel (1) im Überdeckungsbereich mit dem jeweiligen Zahn (7) des Flansches (2) eine Durchbrechung als Kühlöffnung (5) aufweist.

17. Bremstrommel nach einem der vorhergehenden Ansprüche, **dadurch gekennzeichnet, dass** der Trommelmantel (1) und der Flansch (2) vor einer Endbearbeitung einstückig miteinander verbunden sind.

## Claims

1. Brake drum implemented as a casting, comprising a cylindrical drum envelope (1) and a joining flange, which are separated from each other by materials, for fastening on a wheel hub, **characterised in that** said drum envelope (1) and said flange (2) are connected to each other for radial movement relative to each other by means of integrated sliding element (3).

2. Brake drum according to Claim 1, **characterised in that** said sliding elements (3) consist of a material having a melting point higher than that of the material of said drum envelope (1) and said flange (2).

3. Brake drum according to Claim 1 or 2, **characterised in that** said drum envelope (1) and said flange (2) are provided each with teeth (6, 7) engaged into each other and forming a respective gear rim, with said sliding elements (3) being disposed between the mutually facing radial side surfaces of said teeth (6, 7).

4. Brake drum according to any of the preceding Claims, **characterised in that** said sliding element (3) is designed as moulded sheet metal part.

5. Brake drum according to any of the preceding Claims, **characterised in that** said sliding element (3) has a U-shaped design.

6. Brake drum according to any of the preceding Claims, **characterised in that** said sliding element (3) is designed to have two layers forming an inside layer (10) and an outside layer (11).

7. Brake drum according to any of the preceding Claims, **characterised in that** said inside layer (10) and said outside layer (11) of the respective arms (8) opposite to each other are provided with positively locking means in correspondence with each other for blocking an axial displacement, with said inside layers (10) and said outside layers (11) being adapted for radial movement relative to each other.

8. Brake drum according to any of the Claims 3 to 8, **characterised in that** with a single-layer design, said sliding element (3) is held on one side with positive-locking engagement on one of said teeth (6, 7).

9. Brake drum according to any of the preceding Claims, **characterised in that** with a single-layer design, said sliding element (3) is provided with a release coating on the bearing surface opposite to the positive-locking engagement.

10. Brake drum according to any of the preceding Claims, **characterised in that** with a dual-layer design, said sliding element (3) is connected by said inside layer (10) and said outside layer (11) in a positive-locking engagement to the respective tooth (6, 7) bearing against it.

11. Brake drum according to any of the Claims 3 to 10, **characterised in that** the respective sliding element (3) encompasses an associated tooth (6) of said drum envelope (1).

12. Brake drum according to any of the Claims 7 to 11, **characterised in that** a bar (9) connecting the arms (8) of said U-shaped sliding element (3) bears against the tooth root of a tooth gap formed between two teeth (7) of said flange (2).

13. Brake drum according to any of the preceding Claims, **characterised in that** said sliding element (3) is made of a metal or non-metal material.

14. Brake drum according to any of the preceding Claims, **characterised in that** said sliding element (3) is made of stainless steel.

15. Brake drum according to any of the Claims 3 to 14, **characterised in that** said sliding elements (3), said teeth (6) and said teeth (7) extend flush on the face side of the brake drum.

16. Brake drum according to any of the Claims 3 to 15, **characterised in that** said drum envelope (1) presents a perforation as cooling opening (5) in the zone of overlapping the respective tooth (7) of said flange (2).

17. Brake drum according to any of the preceding Claims, **characterised in that** said drum envelope (1) and said flange (2) are integrally connected to each other prior to a finishing operation.

## Revendications

1. Tambour de frein conçu sous forme d'une pièce de fonte, comprend une enveloppe de tambour cylindrique (1) et une bride se joignant, qui sont séparées l'une de l'autre, par des matériaux, pour la fixation à un moyeu de roue, **caractérisé en ce que** ladite enveloppe de tambour (1) et ladite bride (2) sont raccordées l'une à l'autre pour un mouvement radial l'une relativement à l'autre moyennant d'un élément de glissement (3).

2. Tambour de frein selon la revendication 1, **caractérisé en ce que** lesdits éléments de glissement (3) consistent en un matériau dont le point de fusion est plus haut que le point de fusion du matériau de ladite enveloppe de tambour (1) et ladite bride (2).

3. Tambour de frein selon la revendication 1 or 2, **caractérisé en ce que** chacune desdites enveloppe de tambour (1) et bride (2) est pourvue de dents (6, 7) se trouvant en prise l'une dans l'autre, qui forment une couronne dentée respective, auxdits éléments de glissement (3) étant disposés entre des aires latérales radiales l'une en face de l'autre desdites dents (6, 7).

4. Tambour de frein selon une quelconque des revendications précédentes, **caractérisé en ce que** ledit élément de glissement (3) est conçu sous forme d'une pièce en tôle moulée.

5. Tambour de frein selon une quelconque des revendications précédentes, **caractérisé en ce que** ledit élément de glissement (3) est conçu en une forme en U.

6. Tambour de frein selon une quelconque des revendications précédentes, **caractérisé en ce que** ledit élément de glissement (3) est conçu à deux couches formant une couche intérieure (10) et une couche extérieure (11).

7. Tambour de frein selon une quelconque des revendications précédentes, **caractérisé en ce que** ladite couche intérieure (10) et ladite couche extérieure (11) des bras respectifs (8) en opposition l'un à l'autre sont pourvu des moyens de verrouillage positif l'un en correspondance avec l'autre pour le blocage d'un déplacement axial, auxdites couches intérieures (10) and lesdites couches extérieures (11) étant aptes pour un mouvement radial l'une relativement à l'autre.

8. Tambour de frein selon une quelconque des revendications 3 à 8, **caractérisé en ce qu'**au cas d'une configuration monocouche, ledit élément de glissement (3) est retenue d'une côté à verrouillage positif à une desdites dents (6, 7).

9. Tambour de frein selon une quelconque des revendications précédentes, **caractérisé en ce qu'**au cas d'une configuration monocouche, ledit élément de glissement (3) est pourvu d'un revêtement anti-adhérent à la surface d'appui opposée à la prise à verrouillage positif.

10. Tambour de frein selon une quelconque des revendications précédentes, **caractérisé en ce qu'**au cas d'une configuration à deux couches, ledit élément de glissement (3) est raccordé par ladite couche intérieure (10) et ladite couche extérieure (11) en prise à verrouillage positif à la dent respective (6, 7) portant contre lui.

11. Tambour de frein selon une quelconque des revendications 3 to 10, **caractérisé en ce que** l'élément de glissement (3) entoure une dent affectée ladite enveloppe de tambour (1).

12. Tambour de frein selon une quelconque des revendications 7 to 11, **caractérisé en ce qu'**une bride (9) reliant les bras (8) dudit élément de glissement en U (3) porte contre le fond de dent d'une lacune interdentaire formée entre deux dents (7) de ladite bride (2).

13. Tambour de frein selon une quelconque des revendications précédentes, **caractérisé en ce que** ledit élément de glissement (3) consiste en un matériau métallique ou non-métallique.

14. Tambour de frein selon une quelconque des revendications précédentes, **caractérisé en ce que** ledit élément de glissement (3) consiste en acier inoxydable.

15. Tambour de frein selon une quelconque des revendications 3 à 14, **caractérisé en ce que** lesdits éléments de glissement (3), lesdites dents (6) et lesdites dents (7) s'étendent en alignement avec le côté de face du tambour de frein.

16. Tambour de frein selon une quelconque des revendications 3 à 15, **caractérisé en ce que** ladite enveloppe de tambour (1) présente une perforation en tant qu'une ouverture de refroidissement (5) dans la zone de chevauchement de la dent respectif (7) de ladite collerette (2).

17. Tambour de frein selon une quelconque des revendications précédentes, **caractérisé en ce que** ladite enveloppe de tambour (1) et ladite collerette (2) sont raccordé, de façon intégrale, l'une à l'autre avant une opération de finissage.
